# EUROPEAN PATENT APPLICATION

(11) **EP 2 631 556 A1**
(43) Date of publication of application: **28.08.2013**
(21) Application number: 12305195.5
(22) Date of filing: 21.02.2012
(51) Int. Cl.: F24J 2/10, F24J 2/16, F24J 2/14

(54) **Reflector panel for solar power plant, reflector assembly comprising such a panel, and related manufacturing method**

(71) Applicant: Areva Solar, Inc, Mountain View, CA 94043 (US)
(72) Inventor: Coulaty, Guillaume, 13100 Aix-en-Provence (FR); Sadlon, Scott, Mountain View, CA 94040 (US)
(74) Representative: Domenego, Bertrand

(57) **Abstract**

The invention relates to a reflector panel (20) for a solar power plant, comprising:
- a front reflective sheet (22),
- a back sheet (24), the front (22) and back (24) sheets defining a cavity (34) between them, and
- an inner frame structure (26), extending in the cavity (34).

The inner frame structure (26) comprises at least two elongated beams (40) parallel to and spaced apart from one another, each beam (40) extending along each sheet (22, 24) and keeping the sheets (22, 24) spaced apart from one another, the beam (40) having a constant thickness between the sheets (22, 24).

The invention also relates to a manufacturing method thereof, and a reflector assembly comprising such a reflector panel.

## Description

The present invention relates to a reflector panel for a solar power plant, comprising :
- a front reflective sheet,
- a back sheet, the front and back sheets defining a cavity between them, and
- an inner frame structure, extending in the cavity,

Such a reflector panel is intended to be part of a solar reflector assembly of a solar power plant, to concentrate the solar radiation on a solar receiver. The solar receiver typically comprises a tube or a bundle of tubes in which a fluid - typically water - circulates, is heated, boiled and then superheated from the energy of the concentrated solar rays. The produced steam can be used then either to produce either electricity or in any industrial applications requiring steam. The receiver could eventually include photovoltaic cells to produce an electric current.

Such reflector panels are known. For example, document WO-A-2009/083627 describes a reflective panel of that type. The frame of the reflector panel described in that document comprises two longitudinal end plates keeping the sheets of the reflector panel spaced apart from each other, and transverse bars connecting the longitudinal plates to one another. Each longitudinal plate has a variable thickness between the sheets of the element. The transverse bars are trapped inside a matrix of filling material filling the rest of the cavity and ensuring the cohesion of the sheets with one another and with the frame.

However, this reflector panel is not fully satisfactory, because it is expensive to manufacture. Furthermore, the curvature radius of the reflective sheet is low.

One aim of the invention is therefore to propose a reflector panel at a reduced cost. Another aim is to strengthen the rigidity of the reflector panel. A third aim is to propose a method making it possible to obtain reflector panels of various shapes at a lower cost.

To that end, the invention relates to a reflector panel of the aforementioned type, in which the inner frame structure comprises at least two elongated beams parallel to and spaced apart from one another, each beam extending along each sheet and keeping the sheets spaced apart from one another, the beam having a constant thickness between the sheets.

According to other preferred embodiments of the invention, the reflector panel comprises one or more of the following features, considered alone or according to all technically possible combinations:
- the front sheet and the back sheet extend parallel to one another.
- the front sheet is substantially flat,
- the front sheet is curved around an axis extending substantially parallel to the extension direction of the beams,
- the sheets and the beams delimit at least one space inside the cavity between them, and the frame structure also comprises a filler material filling the or each space,
- the filler material is made up of at least one plate of filler material, preferably a polymer plate, positioned inside the or each space,
- the or each plate comprises notches formed on its face oriented toward the back sheet, each notch being elongated substantially parallel to the beams, and
- each sheet is adhered on the beams.

The invention also relates to a method for manufacturing a reflector panel, comprising:
- a front reflective sheet,
- a back sheet, the front and back sheets defining a cavity between them, and
- an inner frame structure, extending in the cavity, the structure comprising a plurality of elongated beams parallel to and spaced apart from one another,
   wherein the method comprises the following successive steps:
- providing the sheets and beams, and
- adhering the sheets on the beams of the frame structure, by applying an adhesive between each sheet and each beam.

According to preferred embodiments of the invention, the method comprises one or more of the following features, considered alone or according to all technically possible combinations.
- it comprises a later step for curving the reflector panel,
- before the adhesion step, the method comprises the following successive steps:
   o providing at least one plate of a filler material, preferably a polymer plate, and
   o positioning the or each plate between the beams of the frame structure so that, once the sheets are adhered on the beams, the or each plate is inserted between the two sheets.

The invention also relates to a reflective assembly, of the type comprising a reflector element supported by a structure, the structure comprising a plurality of transverse ribs on which the reflector element rests, a keel extending substantially perpendicular to the transverse ribs, and a frame for joining the keel to each transverse rib, wherein the reflector element is made up of a plurality of reflector panels as defined hereabove.

Other features and advantages of the invention will appear upon reading the following description, provided solely as an example and done in reference to the appended drawings, in which:
- Figure 1 is a diagrammatic perspective view of a reflective assembly according to a first embodiment of the invention,
- Figure 2 is a diagrammatic perspective view of a reflective panel of the reflective assembly of Figure 1,
- Figure 3 is a diagrammatic view in transverse cross-section of the reflective panel of Figure 2, and
- Figure 4 is a diagrammatic perspective view of a reflective panel according to a second embodiment of the invention.

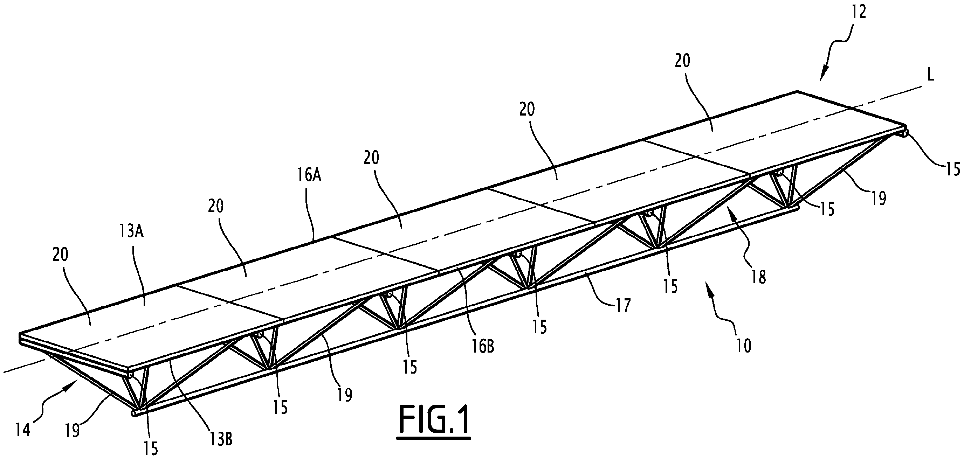

The reflector assembly 10 of Figure 1 is a reflector assembly of a solar power station. It comprises a reflector element 12 supported by a structure 14. The structure 14 is pivotably mounted on a holder (not shown), so as to be able to orient the reflector element 12 so that it reflects the incident solar rays toward a solar receiver (not shown). Preferably, the solar power station comprises a plurality of reflector assemblies similar to the assembly 10 and reflecting the incident solar rays toward a same solar receiver. The solar rays are thus concentrated on the solar receiver using these reflective assemblies.

The reflector assembly 10 is elongated in a longitudinal direction L.

The reflector assembly 10 is typically a linear Fresnel reflector.

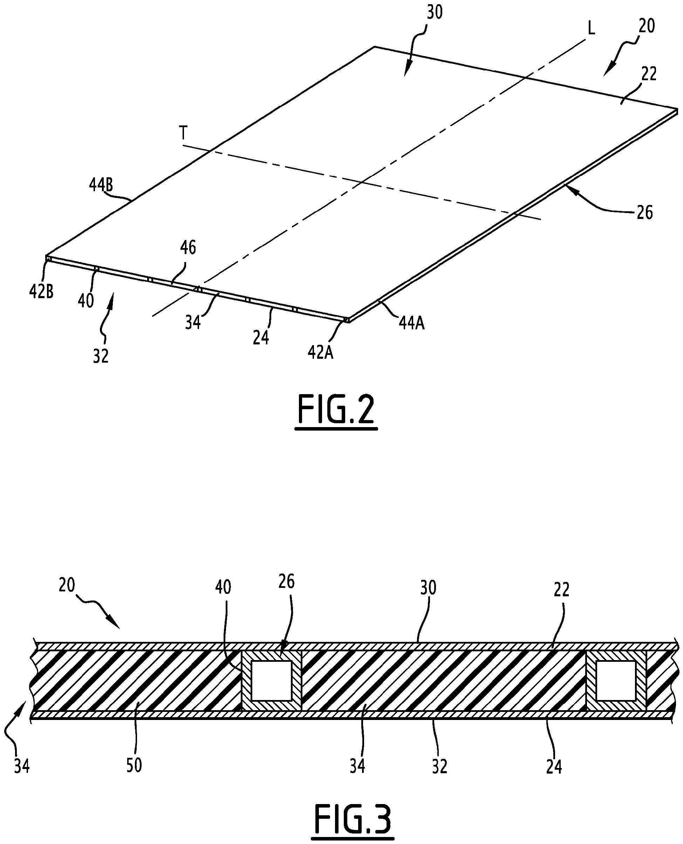

The reflector element 12 comprises a reflective upper face 13A, and a lower face 13B fixed to the structure 14. It is made up of a plurality of reflector panels 20 (in the illustrated example, five reflective panels 20) aligned in the longitudinal direction L and assembled to one another. One of these reflector panels 20 is shown in more detail in Figure 2 and will be described in detail later.

The structure 14 is arranged entirely on the side of the lower face 13B of the reflector element 12. In other words, it does not comprise any element extending above the reflective face 13A.

The structure 14 comprises a plurality of transverse ribs 15 on which the reflector element 12 rests. In the illustrated example, there are seven of these ribs 15.

Each transverse rib 15 is elongated in a transverse direction T substantially perpendicular to the longitudinal direction L. Each transverse rib 15 extends from a transverse edge 16A of the reflective element 12 to the other transverse edge 16B. A transverse rib 15 is arranged at each longitudinal end of the reflector assembly 10.

Preferably, each transverse rib 15 is a bar made from aluminum and having a hollow rectangular section. Each transverse rib 15 is advantageously curved in the transverse direction so that, when the reflective element 12 is mounted on the structure 14, it assumes a concave shape with the concavity facing the reflective face 13A. The curvature radius of the transverse ribs 15 is between twenty and one hundred twenty meters.

The structure 14 also comprises a keel 17, elongated in the longitudinal direction L, and a frame 18 serving as a junction for the keel 17 at each transverse rib 15.

The keel 17 has a smaller length than that of the reflective element 12. It is substantially longitudinally and transversely centered relative to the reflector element 12. It is preferably made from steel or extruded aluminum.

The frame 18 is formed by linking beams 19 each extending from a transverse rib 15 to the keel 17. In particular, each linking beam 19 joins a transverse end of a transverse rib 15 at a point of the keel 17 situated substantially midway between two consecutive transverse ribs 15.

End linking beams 19 join the longitudinal ends of the keel 17 to the transverse end ribs 15. Each end linking beam 19 is inclined between an end of the keel 17 and a transverse end rib 15.

Each linking beam 19 is preferably made from steel or extruded aluminum.

This structure 14 makes it possible to impart a high torsional strength to the reflector assembly 10, and thereby contributes to preventing deformation of the reflector element 12. Furthermore, the structure 14 is particularly light and inexpensive to manufacture.

As shown in Figure 2, the reflector panel 20 is elongated in the longitudinal direction L. It comprises a front reflective sheet 22, a back sheet 24, and an inner frame structure 26 inserted between the two sheets 22, 24.

The front sheet 22 is typically but not only an aluminized or silvered composite sheet, or a thin glass mirror. The back sheet 24 is typically but not only an aluminum or polymer sheet.

The front sheet 22 delimits a large front surface 30 of the reflector panel 20 and the back sheet 24 delimits a large rear face 32 of the reflector panel 20, opposite the front face 30. The front face 30 constitutes a portion of the upper face 13A of the reflector element 12. The rear face 32 constitutes a portion of the lower face 13B of the reflector element 12.

The front sheet 22 and the back sheet 24 extend parallel to one another while being spaced apart from one another. They define a cavity 34 between them.

The inner frame structure 26 extends in the cavity 34. It comprises a plurality of elongate beams 40 spaced apart from one another, each beam 40 being elongated in the longitudinal direction L.

Each beam 40 extends along each sheet 22, 24 and keeps the sheets 22, 24 spaced apart from one another. Each sheet 22, 24 is adhered directly on the beams 40. Only a fine layer of adhesive, typically with a thickness smaller than 1mm, is inserted between each sheet 22, 24 and each beam 40.

Each beam 40 has a constant thickness between the sheets 22, 24. In particular, the beams 40 all have the same thickness.

Each beam 40 is hollow, so as to lighten the structure 26 and strengthen it. Each beam 40 has a square transverse section, so that the adhesion surfaces of the beam 40 on each sheet 22, 24 are flat to allow good adhesion of the sheets 22, 24 on the beam 40.

Preferably, the beams 40 are made from metal, so as to allow good material compatibility with the sheets 22, 24. In a first preferred embodiment of the invention, the beams 40 are in aluminum, to lighten the reflector panel 20.

A first end beam 42A defines a first transverse end 44A of the reflector panel 20. A second end beam 42B defines the second transverse end 44B of the reflector panel 20. The other beams 40 are regularly distributed between the two end beams 42A, 42B.

The beams 40 delimit spaces 46 between them inside the cavity 34.

As shown in Figure 3, the internal structure 26 also comprises a filler material 50 to fill each space 46. This material 50 is preferably a polymer.

The filler material 50 is made up of a plurality of distinct plates 52 of filler material, each plate 52 being positioned inside a respective space 46. A single plate 52 is positioned inside each space 46, and each plate 52 completely fills the space 46 in which it is positioned.

Each plate 52 has a thickness substantially equal to that of the beams 40. Alternatively, each plate 52 has a smaller thickness than that of the beams 40.

Advantageously, each plate 52 is made from extruded polystyrene.

Preferably, each sheet 22, 24 is also directly adhered on each plate 52.

Alternatively, the filler material 50 is formed by an injected expansive material, typically but not only a polyurethane foam.

In the first embodiment, shown in Figures 1 to 3, the reflector panel 20 is substantially flat, i.e. its front 22 and back 24 sheets each have a curvature radius larger than one hundred twenty meters.

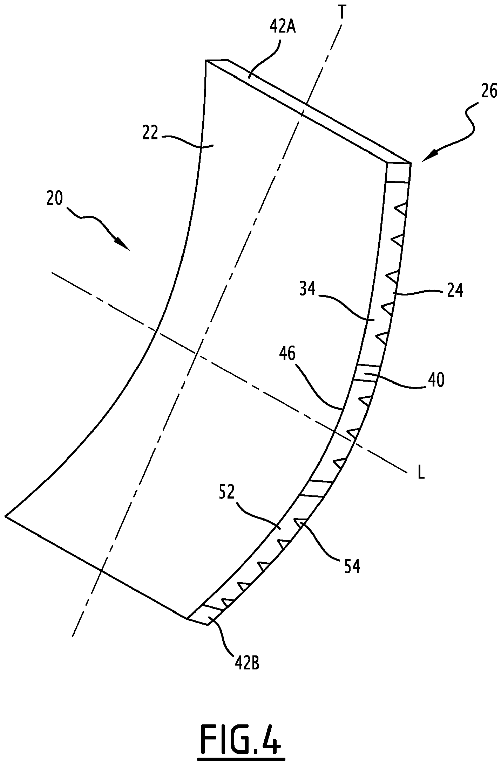

In the second embodiment, shown in Figure 4, the reflector panel 20 is curved around an axis parallel to the longitudinal direction L, i.e. its front 22 and back 24 sheets each have a curvature radius smaller than one hundred twenty meters. In particular, the front 22 and back 24 sheets are curved around said axis parallel to the longitudinal direction L. The curvature radius of each sheet 22, 24 is preferably higher than twenty meters.

Each plate 52 comprises longitudinal notches 54 formed in its face oriented toward the back sheet 24. In this way, it is easier to curve the reflector panel 20 during its manufacture.

In this second embodiment, the reflector panel 20 is particularly adapted to enter into the composition of a parabolic trough reflector.

The method for manufacturing the reflector panel 20 will now be described.

The sheets 22, 24, beams 40 and notched plates 52 of filler material are first provided.

The back sheet 24 is then spread in a mold or a positioning form and an adhesive is applied on its inner surface, facing the cavity 34.

The beams 40 are then positioned parallel to one another, on the inner face of the back sheet 24, so as to form the frame structure 26, while forming spaces between the beams 40. The plates 52 are then positioned inside those spaces, so as to fill them.

The front sheet 22 is then spread on the beams 40 and the plates 52, so as to cover them, the face oriented toward the beams 40 and the plates 52 having been coated with an adhesive beforehand. The reflector panel 20 is thus obtained.

The mold is then closed and pressure is applied on the reflector panel 20, along the front 30 and back 32 faces of the reflector panel 20, so as to closely adhere the front 22 and back 24 sheets on the beams 40 and on the plates 52.

In the case where one wishes to produce a curved reflector panel 20, as in the second embodiment, the manufacturing method comprises a later step for curving the reflector element.

During this curving step, the reflector panel 20 is placed in a second mold where it undergoes vacuum shaping, until the adhesive has completely set. Other shaping methods can be used. Owing to the notches 54 formed in the plates 52, the shaping of the reflector panel 20 is done without breaking the plates 52. Furthermore, these notches 54 make it possible to soften the plates 52 to facilitate their deformation around the axis parallel to the longitudinal direction L.

In the case where the filler material 50 is made up of an injected expansive material, this material is injected during or after this shaping step.

Owing to the invention, the method for manufacturing the reflector panel is simplified, which makes it possible to considerably reduce its cost. In particular, the use of plates of filler material is particularly economical, particularly compared to expansive material injection systems which necessitate specific requirements on the mold and a more expensive manufacturing process.

Furthermore, owing to its composite inner structure, the reflector panel is formed in a single piece, and is particularly light.

Furthermore, the reflector panel is very stiff, the beams ensuring the longitudinal stiffness of the reflector panel and the filler material ensuring the transverse stiffness of the reflector panel.

Lastly, it is possible to obtain, from a same manufacturing method and by simply varying the shape of several molds, reflector panels of varied shapes and curvature radii, at a lower cost.

## Claims

1. A reflector panel (20) for a solar power plant, comprising:
- a front reflective sheet (22),
- a back sheet (24), the front (22) and back (24) sheets defining a cavity (34) between them, and
- an inner frame structure (26), extending in the cavity (34),
**characterized in that** the inner frame structure (26) comprises at least two elongated beams (40) parallel to and spaced apart from one another, each beam (40) extending along each sheet (22, 24) and keeping the sheets (22, 24) spaced apart from one another, the beam (40) having a constant thickness between the sheets (22, 24).

2. The reflector panel (20) according to claim 1, **characterized in that** the front sheet (22) and the back sheet (24) extend parallel to one another.

3. The reflector panel (20) according to claim 1 or 2, **characterized in that** the front sheet (22) is substantially flat.

4. The reflector panel (20) according to claim 1 or 2, **characterized in that** the front sheet (22) is curved around an axis extending substantially parallel to the extension direction (L) of the beams (40).

5. The reflector panel (20) according to any one of the preceding claims, **characterized in that** the sheets (22, 24) and the beams (40) delimit at least one space (46) inside the cavity (34) between them, and **in that** the frame structure (26) also comprises a filler material (50) filling the or each space (46).

6. The reflector panel (20) according to claim 5, **characterized in that** the filler material (50) is made up of at least one plate (52) of filler material, preferably a polymer plate, positioned inside the or each space (46).

7. The reflector panel (20) according to claims 4 and 6 considered together, **characterized in that** the or each plate (52) comprises notches (54) formed on its face oriented toward the back sheet (24), each notch (54) being elongated substantially parallel to the beams (40).

8. The reflector panel (20) according to any one of the preceding claims, **characterized in that** each sheet (22, 24) is adhered on the beams (40).

9. A method for manufacturing a reflector panel comprising:
- a front reflective sheet (22),
- a back sheet (24), the front (22) and back (24) sheets defining a cavity (34) between them, and
- an inner frame structure (26), extending in the cavity (34), the structure comprising a plurality of elongated beams (40) parallel to and spaced apart from one another,
**characterized in that** it comprises the following successive steps:
- providing the sheets (22, 24) and beams (40), and
- adhering the sheets (22, 24) on the beams (40) of the frame structure (26), by applying an adhesive between each sheet (22, 24) and each beam (40).

10. The manufacturing method according to claim 9, **characterized in that** it comprises a later step for curving the reflector panel (20).

11. The manufacturing method according to claim 9 or 10, **characterized in that**, before the adhesion step, the method comprises the following successive steps:
- providing at least one plate (52) of a filler material, preferably a polymer plate, and
- positioning the or each plate (52) between the beams (40) of the frame structure (26) so that, once the sheets (22, 24) are adhered on the beams (40), the or each plate (52) is inserted between the two sheets (22, 24).

12. A reflector assembly (10) comprising a reflector element (12) supported by a structure (14), the structure (14) comprising a plurality of transverse ribs (15) on which the reflector element (12) rests, a keel (17) extending substantially perpendicular to the transverse ribs (15), and a frame (18) for joining the keel (17) to each transverse rib (15), **characterized in that** the reflector element (12) is made up of a plurality of reflector panels (20) according to any one of claims 1 to 8.
